# EUROPÄISCHE PATENTSCHRIFT

(11) **EP 3 786 046 B1**
(45) Veröffentlichungstag und Bekanntmachung des Hinweises auf die Patenterteilung: **04.10.2023**
(21) Anmeldenummer: 20192378.6
(22) Anmeldetag: 24.08.2020
(51) Int. Cl.: B62K 21/18, B62K 21/24

(54) **VORBAUSYSTEM**
STEM SYSTEM
SYSTÈME D'AVANT-CORPS

(30) Priorität: 26.08.2019 DE 202019104673 U
(43) Veröffentlichungstag der Anmeldung: 03.03.2021
(73) Patentinhaber: Canyon Bicycles GmbH, 56073 Koblenz (DE)
(72) Erfinder: Wagner, Lars, 64367 Mühltal (DE); Sömen, Matej, 56077 Koblenz (DE)
(74) Vertreter: dompatent von Kreisler Selting Werner - Partnerschaft von Patent- und Rechtsanwälten mbB

(56) Entgegenhaltungen:
- EP-A1- 3 736 200
- DE-A1- 4 022 377
- DE-U1- 8 500 179
- US-A- 3 955 828
- US-A1- 2019 061 864
- Anonymous: "Ahead-Adapter - wie benutzen? | MTB-News.de | IBC Mountainbike Forum", , 16 October 2010 (2010-10-16), XP093001149, Retrieved from the Internet: URL:https://www.mtb-news.de/forum/t/ahead- adapter-wie-benutzen.489422/ [retrieved on 2022-11-23]

## Beschreibung

Die Erfindung betrifft ein Vorbausystem für Fahrräder, das insbesondere für Rennräder und dergleichen besonders geeignet ist.

Vorbausysteme für Fahrräder weisen einen Vorbauschaft auf. Dieser ist mit einem Vorbau verbindbar oder einstückig mit diesem ausgebildet. Der Vorbau trägt den Lenker oder ist wiederum einstückig mit dem Lenker ausgebildet. Des Weiteren weist ein Vorbausystem einen Gabelschaft auf. Der Gabelschaft ist insbesondere über eine Gabelbrücke mit zwei Gabelbeinen verbunden und üblicherweise einstückig ausgebildet. Zur Montage wird der Gabelschaft von unten in ein Gabelrohr bzw. Steuerrohr eines Fahrradrahmens eingesteckt. In das Gabelrohr bzw. Steuerrohr wird von oben der Vorbauschaft eingesteckt. Zur Verbindung von Gabelschaft und Vorbauschaft sind Klemmeinrichtungen bekannt. Hierbei ist es bekannt, über ein insbesondere konisch ausgebildetes Klemmelement eine geschlitzte Öffnung des Vorbauschafts aufzuweiten. Dies erfolgt, indem das konische Klemmelement über eine sich am Vorbau abstützende Schraube in dem Vorbauschaft gezogen wird und den Vorbauschaft aufweitet.

Des Weiteren ist es bekannt, den Gabelschaft entsprechend lang auszugestalten, so dass dieser an der Oberseite für das Gabelrohr des Fahrradrahmens vorsteht. Bei diesen Ausführungsformen ist es sodann möglich, den Vorbau am oberen Ende des Gabelschaftes insbesondere klemmend zu fixieren.

Als Muffe ausgebildete Klemmeinrichtung, die oberhalb des Gabelrohrs angeordnet sind, sind beispielsweise aus US 3,955,828 und DE 40 223 77 bekannt. Bekannte Vorbauschaftsysteme weisen den Nachteil auf, dass zumindest Teile der Klemmmittel oberhalb des Gabelrohrs bzw. Steuerrohrs des Fahrradrahmens angeordnet sind. Hierdurch sind insbesondere die Gestaltungsmöglichkeiten in diesem Bereich eingeschränkt. Das Dokument "Ahead-Adapter - wie benutzen? 1 MTB-News.de | IBC Mountainbike Forum", 16. Oktober 2010 (2010-10-16), XP093001149, offenbart alle Merkmale des Oberbgriffs des Anspruchs 1.

Aufgabe der Erfindung ist es, ein alternatives Vorbausystem zu schaffen.

Die Lösung der Aufgabe erfolgt erfindungsgemäß durch ein Vorbausystem gemäß Anspruch 1.

Das erfindungsgemäße Vorbausystem weist einen Gabelschaft sowie einen Vorbauschaft auf, der in den Gabelschaft ragt. Der Gabelschaft ist vorzugsweise über eine Gabelbrücke mit zwei Gabelbeinen verbunden, insbesondere einstückig ausgebildet. Der Vorbauschaft kann mit einem Vorbau verbunden werden oder einstückig mit einem Vorbau ausgebildet sein. Der Vorbau trägt einen Fahrradlenker oder kann wiederum einstückig mit diesem ausgebildet sein. Ferner ist eine Klemmeinrichtung zum klemmenden Verbinden von Vorbauschaft und Gabelschaft vorgesehen. Erfindungsgemäß weist die Klemmeinrichtung ein Klemmmittel auf, das durch eine Einführöffnung im Gabelschaft in diesen ragt. Die Einführöffnung ist in einer Umfangsfläche bzw. Mantelfläche des Gabelschafts angeordnet ist. Es handelt sich bei der Einführöffnung des Klemmmittel nicht um die Öffnung des Gabelschafts, in die der Vorbauschaft eingesteckt wird.

Besonders bevorzugt ist es, dass die Einführöffnung bei einem montierten Vorbausystem in einem vorderen Bereich des Gabelschafts angeordnet ist. Der vordere Bereich ist hierbei derjenige Bereich, der in Fahrtrichtung weist. Des Weiteren ist es bevorzugt, dass bezogen auf die Längserstreckung des Gabelschafts die Einführöffnung in einem mittleren Bereich angeordnet ist. Insofern ist es bevorzugt, dass die Einführöffnung bezogen auf die Länge des Gabelschafts, das heißt die Längserstreckung des Gabelschafts in Längsrichtung etwa auf halber Höhe bzw. im mittleren Bereich vorgesehen ist.

Bei einer weiteren besonders bevorzugten Ausführungsform weist der Gabelschaft eine der Einführöffnung gegenüberliegende Aufnahmeöffnung für das Klemmmittel auf. Das Klemmmittel ragt somit in bevorzugter Ausführungsform insbesondere quer zur Längsrichtung des Gabelschafts durch diesen hindurch. Insbesondere erstreckt sich das Klemmmittel durch den Gabelschaft hindurch, wobei es bei einem Gabelschaft mit rundem Querschnitt besonders bevorzugt ist, dass das im Wesentlichen zylindrische oder langgestreckt ausgebildete Klemmmittel die sich in Längsrichtung erstreckende Mittellinie des Gabelschaftes kreuzt.

Des Weiteren ist es bevorzugt, dass im Bereich der Aufnahmeöffnung ein Fixierelement für das Klemmmittel vorgesehen ist. Hierbei kann es sich beispielsweise um ein mit einem stiftförmigen Klemmmittel zu verbindendes Fixierelement handeln. Besonders bevorzugt ist es, dass das Klemmmittel an demjenigen Bereich, der in die Aufnahmeöffnung ragt, ein Gewinde aufweist und als Fixierelement in der Aufnahmeöffnung ebenfalls ein Gewinde vorgesehen ist. Insofern ist es bevorzugt, dass das Klemmmittel als Schraube ausgebildet ist oder zumindest stiftförmig ausgebildet ist und ein Gewinde aufweist.

Des Weiteren ist bevorzugt, dass auch der Vorbauschaft eine Öffnung aufweist, in die das Klemmmittel ragt. Besonders bevorzugt ist es, dass das insbesondere stiftförmig beispielsweise als Schraube ausgebildete Klemmmittel durch die Öffnung im Vorbauschaft hindurchgeführt ist, so dass auf der einen Seite des Vorbauschafts das Klemmmittel durch die Einführöffnung geführt und auf der gegenüberliegenden Seite von der Aufnahmeöffnung aufgenommen ist.

Des Weiteren ist es bevorzugt, dass die Öffnung des Vorbauschafts als sich insbesondere in Längsrichtung erstreckendes Langloch ausgebildet ist. Hierdurch ist auf einfache Weise eine Höhenverstellung des Vorbauschafts und somit des Lenkers möglich. Hierzu muss das Klemmmittel, d. h. insbesondere die Schraube nur gelöst, jedoch nicht vollständig entfernt werden. Sodann kann die Höhe des Vorbauschafts eingestellt und das Klemmmittel wieder fixiert werden.

Zur Verbesserung der Klemmwirkung ist erfindungsgemäß zwischen dem Vorbauschaft und dem Gabelschaft mindestens ein Zwischenelement vorgesehen ist. Das mindestens eine Zwischenelement ist somit zwischen einer Außenseite des Vorbauschafts und einer Innenseite des Gabelschafts angeordnet. Insbesondere wird durch das mindestens eine Zwischenelement ein Zwischenraum zwischen dem Vorbauschaft und dem Gabelschaft ausgefüllt, wobei ein insbesondere vollständiges Ausfüllen bevorzugt ist. Hierdurch kann eine gleichmäßigere Verteilung der Klemmkraft realisiert werden. Hierzu ist es des Weiteren besonders bevorzugt, dass zwei Zwischenelemente vorgesehen sind, die einander gegenüberliegen. Jedes der beiden Zwischenelemente ist somit zwischen dem Vorbauschaft und dem Gabelschaft angeordnet, wobei es besonders bevorzugt ist, dass ein Zwischenelement im montierten Zustand in Fahrtrichtung vor dem Vorbauschaft und das andere in Fahrtrichtung hinter dem Vorbauschaft angeordnet ist. Hierdurch kann die Klemmung weiter verbessert werden.

Des Weiteren ist es möglich, dass die Querschnittsform des Vorbauschafts sich von der Querschnittsform des Gabelschafts unterscheidet. Insbesondere kann in einem vorzugsweise runden Gabelschaft ein unrunder Vorbauschaft angeordnet sein. Hierzu ist es möglich, beispielsweise einen flexiblen Vorbauschaft vorzusehen, der innerhalb des Gabelschafts insbesondere zur Dämpfung von Stößen flexibel ausgestaltet sein kann. Insbesondere ist es möglich, dass der Vorbauschaft einen Querschnitt aufweist, dessen Abmessungen im montierten Zustand in Fahrtrichtung kleiner sind als die Abmessungen quer zur Fahrtrichtung. Insbesondere ist der Vorbauschaft queroval ausgebildet. Ein derartiger breiterer Vorbauschaft weist den Vorteil auf, dass ein Biegen oder Flexen in Fahrtrichtung möglich ist. Dieses Biegen oder Flexen erfolgt insbesondere innerhalb des Gabelschaftes in Fahrtrichtung. Quer zur Fahrtrichtung weist ein derartiger Vorbauschaft eine höhere Steifigkeit auf. Durch einen derartig ausgestalteten Vorbauschaft kann der Fahrkomfort deutlich verbessert werden, da insbesondere Stöße gut abgefangen werden bzw. gedämpft werden.

Um eine einfache Montage zu gewährleisten, ist es bei einer besonders bevorzugten Weiterbildung der Erfindung bevorzugt, dass in dem Gabelrohr oder dem Steuerrohr des Fahrradrahmens eine Zugangsöffnung vorgesehen ist. Durch die Zugangsöffnung ist das insbesondere als Schraube ausgerichtete Klemmmittel zugänglich. Bei einem im mittleren und vorderen Bereich des Gabelschafts angeordneten Klemmmittel ist die Zugangsöffnung somit vorzugsweise ebenfalls im mittleren oder vorderen Bereich des Gabelrohrs bzw. Steuerrohrs angeordnet. Die Öffnung kann durch einen Pfropfen oder dergleichen verschließbar sein, um das Eindringen von Feuchtigkeit zu vermeiden.

Ein besonderer Vorteil der erfindungsgemäßen Ausgestaltung des Vorbausystems und der Anordnung der Klemmeinrichtung im Inneren des Gabelschaftes des Fahrradrahmens besteht darin, dass der Bereich oberhalb des Gabelschaftes, in dem der Vorbau angeordnet ist, freier designed werden kann sowie insbesondere aerodynamischere Ausgestaltungen möglich sind. Insbesondere kann der Vorbau derart ausgestaltet sein, dass dieser nicht über das Oberrohr des Fahrradrahmens vorsteht. Des Weiteren sind hierdurch tiefere Lenkerpositionen und/oder andere Ausgestaltungen des gesamten Rahmendesigns möglich.

Die Erfindung betrifft ferner einen Fahrradrahmen mit einem Gabelrohr, das wie vorstehend beschrieben ausgebildet ist und insbesondere eine Zugangsöffnung für das Klemmmittel aufweist. Der Fahrradrahmen weist ferner die üblichen Bauteile wie ein Unterrohr, ein Sattelrohr und gegebenenfalls auch ein Oberrohr auf.

Nachfolgend wird die Erfindung anhand der bevorzugten Ausführungsform unter Bezugnahme auf die anliegenden Zeichnungen näher erläutert.

Es zeigen:

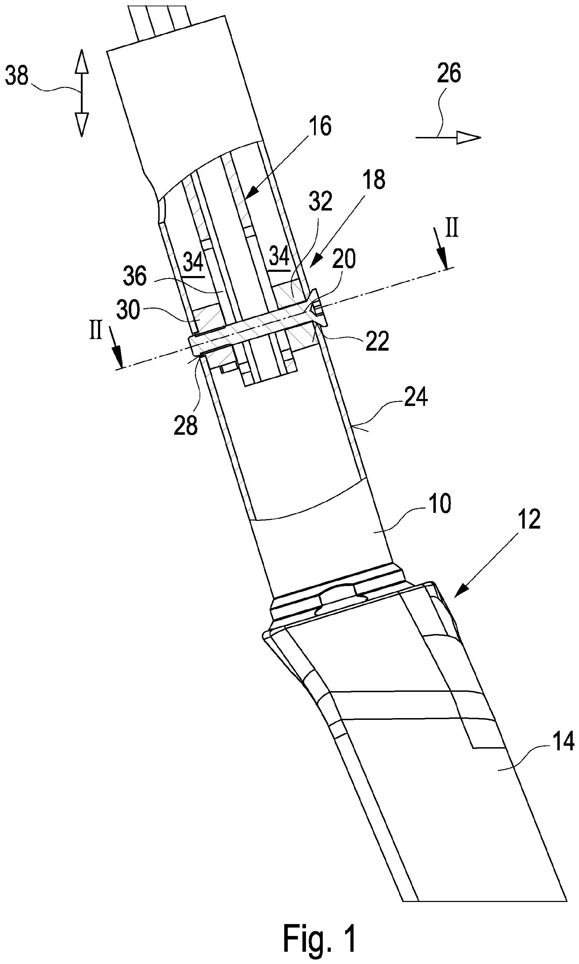

- Fig. 1:: eine schematische teilweise geschnittene Seitenansicht eines Vorbausystems,
- Fig. 2: eine schematische Schnittansicht entlang der Linie II-II in Fig. 1 und
- Fig. 3: einen Ausschnitt des Vorbausystems im Bereich der Klemmeinrichtung im montierten Zustand.

Das erfindungsgemäße Vorbausystem weist einen Gabelschaft 10 auf, der über eine Gabelbrücke 12 mit zwei Gabelbeinen 14 verbunden, insbesondere einstückig ausgebildet ist. Innerhalb des Gabelschafts 10 ist ein Vorbauschaft 16 angeordnet. Der Vorbauschaft 16 ist über eine Klemmeinrichtung 18, die im Wesentlichen ebenfalls innerhalb des Gabelschafts 10 angeordnet ist mit dem Gabelschaft 10 klemmend verbunden.

Die Klemmeinrichtung 18 weist hierzu ein im dargestellten Ausführungsbeispiel als Schraube ausgebildetes Klemmmittel 20 auf, das in einer Eintrittsöffnung 22 angeordnet ist. Die Eintrittsöffnung 22 ist in einer Umfangsfläche 24 des Gabelschafts 10, insbesondere an einer Vorderseite angeordnet. Die Vorderseite ist hierbei diejenige Seite des Gabelschafts, die im montierten Zustand in Fahrtrichtung 26 weist.

Das Klemmmittel 20 ragt durch den Gabelschaft 10 hindurch in eine gegenüberliegende Aufnahmeöffnung 28, die ebenfalls im Gabelschaft 10 vorgesehen ist. Die Aufnahmeöffnung 28 weist im dargestellten Ausführungsbeispiel als Fixierelement ein Innengewinde auf, so dass ein Außengewinde des als Schraube ausgebildeten Klemmmittels 20 in dieses eingeschraubt werden kann.

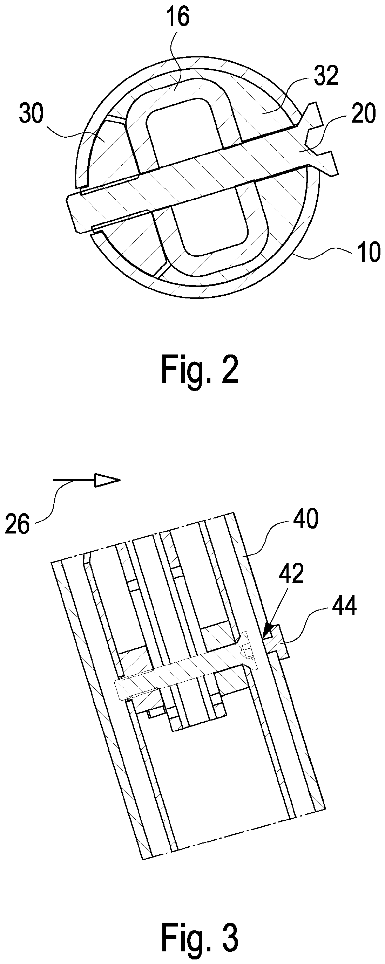

Zur weiteren Verbesserung der Klemmverbindung zwischen Gabelschaft 10 und Vorbauschaft 16 sind zwischen dem Gabelschaft 10 und dem Vorbauschaft 16, zwei Zwischenelemente 30, 32, wie Klemmsteine 30, 32 angeordnet. Vorzugsweise füllen die Klemmsteine 30,32 den Zwischenraum 34 zwischen der Außenseite des Vorbauschafts 16 und der Innenseite des Gabelschafts 10 vollständig aus (Fig. 2). Hierzu ist es wie in Fig. 2 ersichtlich auch möglich, dass die beiden Zwischenelemente unterschiedlich ausgebildet sind und ein in Fahrtrichtung vorderes Zwischenelement 32 auch seitlich neben dem Vorbauschaft 16 angeordnet ist bzw. diesen ähnlich einer Klemme U-förmig umgibt.

Des Weiteren weist der Vorbauschaft 16 eine insbesondere als Langloch ausgebildete Öffnung 36 auf, wobei der Vorbauschaft 16 wie dargestellt als Hohlprofil ausgebildet sein kann. Durch die Ausgestaltung der Öffnung 36 als Langloch in Längsrichtung des Vorbauschafts 16 ist auf einfache Weise ein Einstellen der Höhe des Vorbauschafts und somit des Vorbaus bzw. des Lenkers möglich. Dies kann durch einfaches Lösen der Schraube 20 und Verschieben des Vorbauschafts in Längsrichtung 38 erfolgen. Die Fixierung erfolgt sodann durch ein einfaches Anziehen der Schraube 20 und somit ein klemmendes Halten des Vorbauschafts 16 im Gabelschaft 10 über die beiden Zwischenelemente 30, 32.

Zur einfachen Montage weist ein Gabelrohr oder Steuerrohr 40 (Fig. 3) eines Fahrradrahmens, eine Öffnung 42 auf, die ebenfalls im vorderen Bereich des Gabelschafts 10 angeordnet ist. Der vordere Bereich ist wiederum derjenige Bereich des Gabelschafts, der in Fahrtrichtung 20 weist. Durch die Öffnung kann die Schraube 20 beispielsweise mit einem entsprechenden Schlüssel gelöst oder fixiert werden. Die Öffnung 42 ist mit einem Kunststoffpfropfen 42 oder dergleichen verschlossen, um ein Eindringen von Feuchtigkeit zu vermeiden.

## Patentansprüche

1. Vorbausystem, insbesondere für Rennradlenker mit,
einem Gabelschaft (10),
einem Vorbauschaft (16), der in den Gabelschaft (10) ragt und
einer Klemmeinrichtung (18) zum klemmenden Verbinden von Vorbauschaft (16) und Gabelschaft (10)
wobei die Klemmeinrichtung (18) ein Klemmmittel (20) aufweist, das durch eine Einführöffnung (22) im Gabelschaft in diesen ragt, und
zur Verbesserung der Klemmwirkung zwischen dem Vorbauschaft (16) und dem Gabelschaft (10) mindestens ein Zwischenelement (30, 32) vorgesehen ist
**dadurch gekennzeichnet, dass**
die Einführöffnung (22) in einer Umfangsfläche (24) des Gabelschafts (10) angeordnet ist.

2. Vorbausystem nach Anspruch 1, **dadurch gekennzeichnet, dass** das mindestens eine Zwischenelement (30, 32) in einem Zwischenraum (34) zwischen Vorbauschaft (16) und Gabelschaft (10) angeordnet ist und diesem insbesondere vollständig ausfüllt.

3. Vorbausystem nach Anspruch 1 oder 2, **dadurch gekennzeichnet, dass** zwei einander gegenüberliegende Zwischenelemente (30, 32) vorgesehen sind, die jeweils zwischen Gabelschaft (10) und Vorbauschaft (16) angeordnet sind.

4. Vorbausystem nach Ansprüche 1 bis 3, **dadurch gekennzeichnet, dass** die Einführöffnung (22) im montierten Zustand im vorderen Bereich und vorzugsweise in Längsrichtung des Gabelschafts im mittleren Bereich des Gabelschafts (10) angeordnet ist.

5. Vorbausystem nach einem der Ansprüche 1 - 4, **dadurch gekennzeichnet, dass** der Gabelschaft (10) eine der Einführöffnung (22) gegenüberliegende Aufnahmeöffnung (28) für das Klemmmittel (20) aufweist.

6. Vorbausystem nach Anspruch 5, **dadurch gekennzeichnet, dass** im Bereich der Aufnahmeöffnung (28), insbesondere in der Aufnahmeöffnung (28) ein Fixierelement für das Klemmmittel (20) vorgesehen ist.

7. Vorbausystem nach einem der Ansprüche 1 - 6, **dadurch gekennzeichnet, dass** Klemmmittel (20) eine Schraube aufweist und vorzugsweise das Fixierelement als Innengewinde ausgebildet ist.

8. Vorbausystem nach einem der Ansprüche 1 - 7, **dadurch gekennzeichnet, dass** der Vorbauschaft (16) eine Öffnung (36) aufweist, in die das Klemmmittel (20) ragt und insbesondere hindurchgeführt ist.

9. Vorbausystem nach Anspruch 8, **dadurch gekennzeichnet, dass** die Öffnung (36) zur Höhenverstellung des Vorbauschafts (16) als Langloch ausgebildet ist.

10. Vorbausystem nach einem der Ansprüche 1 - 9, **dadurch gekennzeichnet, dass** der Vorbauschaft (16) eine Querschnittsform aufweist, die sich von der Querschnittsform des Gabelschafts (10) unterscheidet.

11. Vorbausystem nach Anspruch 10, **dadurch gekennzeichnet, dass** der Vorbauschaft (16) eine unrunde Querschnittsform aufweist.

12. Vorbausystem nach einem der Ansprüche 1 - 11, **dadurch gekennzeichnet, dass** im montierten Zustand der Gabelschaft (10) in einem Gabelrohr (40) eines Fahrradrahmens angeordnet ist, wobei das Gabelrohr (40) eine Zugangsöffnung (42) zu dem Klemmmittel (20) aufweist.

## Claims

1. A stem system, in particular for racing bicycle handlebars, comprising
a steerer tube (10),
a stem tube (16) protruding into the steerer tube (10), and
a clamping device (18) for clampingly connecting stem tube (16) and steerer tube (10),
wherein the clamping device (18) comprises a clamping means (20) protruding into the steerer tube through an insertion opening (22) thereof, and
at least one intermediate element (30, 32) is provided between the stem tube (16) and the steerer tube (10) for improving the clamping effect,
**characterized in that**
the insertion opening (22) is arranged in a circumferential surface (24) of the steerer tube (10).

2. The stem system according to claim 1, **characterized in that** the at least one intermediate element (30, 32) is arranged in an intermediate space (34) between the stem tube (16) and the steerer tube (10) and particularly completely fills said intermediate space.

3. The stem system according to claim 1 or 2, **characterized in that** two opposite intermediate elements (30, 32) are provided, each of which is arranged between the steerer tube (10) and the stem tube (16).

4. The stem system according to claim 1 to 3, **characterized in that** the insertion hole (22) is arranged in the mounted state in the front area and preferably in longitudinal direction of the steerer tube in the central area of the steerer tube (10).

5. The stem system according to any one of claims 1-4, **characterized in that** the steerer tube (10) comprises a receiving opening (28) opposite the insertion opening (22) for the clamping means (20).

6. The stem system according to claim 5, **characterized in that** in the area of the receiving opening (28), in particular in the receiving opening (28), a fixing element for the clamping means (20) is provided.

7. The stem system according to any one of claims 1-6, **characterized in that** the clamping means (20) comprises a screw and that the fixing element is preferably formed as an inner thread.

8. The stem system according to any one of claims 1-7, **characterized in that** the stem tube (16) comprises an opening (36) which protrudes into the clamping means (20) and is particularly guided therethrough.

9. The stem system according to claim 8, **characterized in that** the opening (36) is provided for height adjustment of the stem tube (16) as an oblong hole.

10. The stem system according to any one of claims 1-9, **characterized in that** the stem tube (16) comprises a cross-sectional shape which differs from the cross-sectional shape of the steerer tube (10).

11. The stem system according to claim 10, **characterized in that** the stem tube (16) comprises a non-circular cross-sectional shape.

12. The stem system according to any one of claims 1-11, **characterized in that** in the mounted state the steerer tube (10) is arranged in a fork tube (40) of a bicycle frame, wherein the fork tube (40) comprises an access opening (42) to the clamping means (20).

## Revendications

1. Système de potence, en particulier pour guidon de vélo de course, comprenant
un tube de fourche (10),
un tube de potence (16) qui rentre dans le tube de fourche (10), et
un dispositif de serrage (18) permettant de relier par serrage le tube de potence (16) et le tube de fourche (10),
dans lequel le dispositif de serrage (18) présente un moyen de serrage (20) qui rentre dans le tube de fourche à travers un orifice d'introduction (22), et dans lequel au moins un élément intermédiaire (30, 32) est prévu en vue d'améliorer l'effet de serrage entre le tube de potence (16) et le tube de fourche (10),
**caractérisé en ce que** l'orifice d'introduction (22) est agencé dans une surface périphérique (24) du tube de fourche (10).

2. Système de potence selon la revendication 1, **caractérisé en ce que** l'élément intermédiaire (30, 32), au moins au nombre de un, est agencé dans un espace intermédiaire (34) entre le tube de potence (16) et le tube de fourche (10), et en particulier remplit complètement ledit espace intermédiaire.

3. Système de potence selon la revendication 1 ou 2, **caractérisé en ce que** sont prévus deux éléments intermédiaires (30, 32) en vis-à-vis, qui sont respectivement agencés entre le tube de fourche (10) et le tube de potence (16).

4. Système de potence selon les revendications 1 à 3, **caractérisé en ce que** l'orifice d'introduction (22) est agencé, à l'état monté, dans la région avant et de manière préférée dans la région centrale du tube de fourche (10) dans la direction longitudinale du tube de fourche.

5. Système de potence selon l'une des revendications 1 à 4, **caractérisé en ce que** le tube de direction (10) présente un orifice de réception (28) du moyen de serrage (20), situé à l'opposé de l'orifice d'insertion (22).

6. Système de potence selon la revendication 5, **caractérisé en ce qu'**un élément de fixation du moyen de serrage (20) est prévu dans la région de l'orifice de réception (28), en particulier dans l'orifice de réception (28).

7. Système de potence selon l'une des revendications 1 à 6, **caractérisé en ce que** le moyen de serrage (20) présente une vis et **en ce que** l'élément de fixation est de préférence exécuté sous la forme d'un filetage intérieur.

8. Système de potence selon l'une des revendications 1 à 7, **caractérisé en ce que** le tube de potence (16) présente un orifice (36) dans lequel rentre le moyen de serrage (20), et en particulier à travers lequel il est guidé.

9. Système de potence selon la revendication 8, **caractérisé en ce que** l'orifice (36) est réalisé sous la forme d'un trou oblong pour régler en hauteur le tube de potence (16).

10. Système de potence selon l'une des revendications 1 à 9, **caractérisé en ce que** le tube de potence (16) présente une section transversale dont la forme diffère de celle de la section transversale du tube de fourche (10).

11. Système de potence selon la revendication 10, **caractérisé en ce que** le tube de potence (16) présente une section transversale de forme non ronde.

12. Système de potence selon l'une des revendications 1 à 11, **caractérisé en ce que** le tube de fourche (10), à l'état monté, est agencé dans un orifice pour fourche (40) d'un cadre de bicyclette, l'orifice pour fourche (40) présentant un orifice d'accès (42) menant au moyen de serrage (20).
